# EUROPEAN PATENT APPLICATION

(11) **EP 4 726 190 A1**
(43) Date of publication of application: **15.04.2026**
(21) Application number: 24818393.1
(22) Date of filing: 22.04.2024
(51) Int. Cl.: F02C 6/18, F02C 3/04, F02C 7/00

(54) **MULTIFUNCTIONAL GAS TURBINE POWER GENERATION SYSTEM**

(30) Priority: 07.06.2023 CN 202310670810
(71) Applicant: Dongfang Electric Corporation Dongfang Turbine Co., Ltd., Deyang, Sichuan 618000 (CN)
(72) Inventor: WANG, Song, Deyang, Sichuan 618000 (CN); FANG, Yu, Deyang, Sichuan 618000 (CN); FAN, Xiaoping, Deyang, Sichuan 618000 (CN); ZHANG, Yongpeng, Deyang, Sichuan 618000 (CN); YANG, Zhi, Deyang, Sichuan 618000 (CN); CHENG, Guoqiang, Deyang, Sichuan 618000 (CN); ZHAI, Xuan, Deyang, Sichuan 618000 (CN); WANG, Xin, Deyang, Sichuan 618000 (CN); LUO, Fang, Deyang, Sichuan 618000 (CN); WANG, Gaoliang, Deyang, Sichuan 618000 (CN); FAN, Lihua, Deyang, Sichuan 618000 (CN); ZHAO, Xianbo, Deyang, Sichuan 618000 (CN); TAN, Xiaowen, Deyang, Sichuan 618000 (CN); ZHANG, Wenting, Deyang, Sichuan 618000 (CN); WEI, Xiaolong, Deyang, Sichuan 618000 (CN); YUAN, Xiaoxu, Deyang, Sichuan 618000 (CN); TANG, Jun, Deyang, Sichuan 618000 (CN); ZHOU, Jia, Deyang, Sichuan 618000 (CN); ZHANG, Haotian, Deyang, Sichuan 618000 (CN)
(74) Representative: Santarelli
(86) International application number: PCT/CN2024/089105
(87) International publication number: WO 2024/250858

(57) **Abstract**

A multifunctional gas turbine power generation sys-tem, comprising: a first air compressor group, a second air compres-sor group, an air storage device, an air turbine group, a differential pressure turbine group, water-air heat exchangers and a water stor-age device, wherein the fist air compressor group, the second air compressor group and the air storagedevice are connected to cach other in sequenceby meansofa valve pipeline;an exhaust port of the fist air compressor group is further connected to an airinlet of the air storage device by means of a valve pipeline; an air inlet of the air turbine group is connected to an exhaust port of the air storage device by means of a valve pipeline; an air inlet ofthe differential pressure turbine group is comected to the exhaust port of the air storage de-vice by means of a valve pipeline; the waler-air heat exchanger is provided bchind cach aircompressorof the first air compressor group and the second air compressor group; the water-air heat exchanger is provided in front of each air turbine of the air turbine group; the water-air heat exchangers are provided at two ends of each differen-tial pressure turbine of the differential pressure turbine group; and cach water-air heat exchanger is also connected to the water storagd device. By means of the system, the loss of high-quality heat energy can be effectively reduced.

## Description

### Technical Field

The present invention relates to the technical field of gas power generation, particularly to a multi-functional gas turbine power generation system based on compressed air.

### Background of the Invention

When a large-scale gas turbine for power generation is working, the front-end compressor needs to consume a large amount of compression work. Taking a 300-MW-class gas turbine as an example, the compression work of the front-end compressor is as high as 400-MW class, even much larger than the generator power. This configuration greatly affects the ability of the gas turbine to output electric power externally. Nearly 60% of the gas turbine shaft power is consumed in the compression process and is not output as electric power. In a compressed air energy storage system, the air compressor and air turbine operate in a time-shifted manner. This configuration allows for the utilization of off-peak electricity or zero-cost electricity for air compression, while the air turbine is activated during peak electricity demand periods to generate and output electrical power. Coupling the gas turbine power generation technology with the compressed air energy storage system can significantly increase the power generation power of the gas turbine, improve the power generation efficiency, realize the physical energy storage function with high power and long duration at the same time, and collect the heat generated during the compression process to supply heat externally, forming a combined heat and power generation technical solution for energy cascade utilization.

### Summary of the Invention

The present invention aims to solve at least one of the technical problems in the aforementioned technologies to a certain extent. To this end, the present invention proposes a multi-functional gas turbine power generation system, comprising:
the first compressor unit, the second compressor unit, the gas storage device, the air turbine unit, the differential pressure turbine unit, the water-air heat exchanger and the water storage device; wherein, the first compressor unit, the second compressor unit and the gas storage device are sequentially connected through valve pipelines;
the air outlet of the first compressor unit is also connected to the air inlet of the gas storage device through a valve pipeline; the air inlet of the air turbine unit is connected to the air outlet of the gas storage device through a valve pipeline; the air inlet of the differential pressure turbine unit is connected to the air outlet of the gas storage device through a valve pipeline;
a water-air heat exchanger is provided after each compressor in the first compressor unit and the second compressor unit; a water-air heat exchanger is provided before each air turbine in the air turbine unit; water-air heat exchangers are provided at both ends of each differential pressure turbine in the differential pressure turbine unit;
each water-air heat exchanger is also connected to the water storage device;

A pipeline interface is reserved between the last-stage differential pressure turbine in the differential pressure turbine unit and the water-air heat exchanger at the rear end of the exhaust of the last-stage differential pressure turbine, and the air outlet of the gas storage device is also connected to the pipeline interface through a valve pipeline;

The system also comprises:
a burner, a gas turbine, a combustion regenerator and a turbine heater; wherein, the first air inlet of the burner is connected to the air outlet of the water-air heat exchanger at the rear end of the last-stage differential pressure turbine; the second air inlet of the burner is connected to the natural gas supply pipeline; the air outlet of the burner is connected to the air inlet of the gas turbine;
the combustion regenerator is used for heat exchange between the first pipeline and the second pipeline;
the turbine heater is used for heat exchange between the third pipeline and the fourth pipeline;
the first pipeline is the pipeline between the first air inlet of the burner and the water-air heat exchanger at the rear end of the last-stage differential pressure turbine; the second pipeline is the pipeline of the first exhaust branch of the air outlet of the gas turbine; the third pipeline is the pipeline between the last-stage air turbine in the air turbine unit and the corresponding water-air heat exchanger of the last-stage air turbine; the fourth pipeline is the pipeline of the second exhaust branch of the air outlet of the gas turbine.

Preferably, a cooler is also provided in the pipeline between the second compressor unit and the gas storage device.

Preferably, the water storage device comprises a hot water storage tank and a cold water storage tank, the hot water storage tank and the cold water storage tank are connected through a cooling water circulation pipeline, and each water-air heat exchanger is connected to the cooling water circulation pipeline.

Preferably, a cooling tower is also provided in the cooling water circulation pipeline before the water inlet of the cold water storage tank.

Preferably, the air outlets of the first exhaust branch and the second exhaust branch are respectively connected to the air inlet of the main exhaust pipeline.

Preferably, a user-end water-air heat exchanger is also provided between the air inlet and the air outlet of the main exhaust pipeline, and the user-end water-air heat exchanger is used for heat exchange between the user-end heating pipeline network and the main exhaust pipeline.

Preferably, the gas turbine, the first-stage air turbine in the air turbine unit, and the first-stage differential pressure turbine in the differential pressure turbine unit are also respectively connected to the generator.

Preferably, an air filter is also provided before the air inlet of the first compressor unit.

Compared with the prior art, the beneficial effects of the present invention are as follows:
The system provided by the present invention stores the compression heat of the high-temperature air at the outlet of the compressor, reduces the loss of high-quality heat energy, and is beneficial to improving the overall operation efficiency of the unit. The split design of the gas turbine and the compressor in the present invention saves the power consumption of the compressor during power generation and significantly improves the output of the gas turbine unit. The system provided by the present invention preheats the compressed air with the exhaust gas of the gas engine, improving the work-doubling ability of the compressed air entering the air turbine. The preheated flue gas is used to heat the water from the heating network, recycling the low-quality heat energy and realizing a combined heat and power supply. The system provided by the present invention can operate under two working conditions, namely the energy storage mode and the normal power supply mode, with good flexibility.

The other characteristics and advantages of the present invention will be explained in the subsequent description and will partly become comprehensible through the description or become understandable through the implementation of the present invention. The purpose and other advantages of the present invention can be realized and obtained through the structure specifically explained by the Description and Drawings.

The technical solutions of the present invention will be further according to detail below through the drawings and embodiments.

### Brief Description of the Drawings

The drawings are used to provide a further understanding of the present invention and form a part of the Description. They are used to explain the present invention together with the embodiments of the present invention and do not constitute a limitation to the present invention. In the drawings:

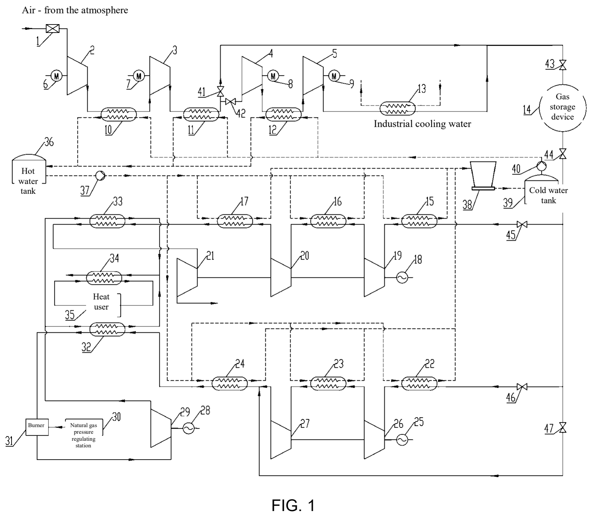

Fig. 1 is a schematic diagram of a multi-functional gas turbine power generation system given in an embodiment of the present invention; Reference numerals:
1. Air filter; 2. Compressor A; 3. Compressor B; 4. Compressor C; 5. Compressor D; 6. Motor A; 7. Motor B; 8. Motor C; 9. Motor D; 10. Cooler A; 11. Cooler B; 12. Cooler C; 13. Cooler D; 14. Gas storage device; 15. Water-air heat exchanger A; 16. Water-air heat exchanger B; 17. Water-air heat exchanger C; 18. Generator A; 19. Air turbine A; 20. Air turbine B; 21. Air turbine C; 22. Water-air heat exchanger D; 23. Water-air heat exchanger E; 24. Water-air heat exchanger F; 25. Generator B; 26. Differential pressure turbine A; 27. Differential pressure turbine B; 28. Generator C; 29. Gas turbine; 30. Natural gas pressure regulating station; 31. Burner; 32. Combustion regenerator; 33. Turbine heater; 34. User-side water-air heat exchanger; 35. User end; 36. Hot water storage tank; 37. Circulating water pump A; 38. Cooling tower; 39. Cold water storage tank; 40. Circulating water pump B; 41. Stop valve A; 42. Stop valve B; 43. Stop valve C; 44. Stop valve D; 45. Stop valve E; 46. Stop valve F; 47. Stop valve G.

### Detailed Description of Embodiments

The following describes the preferred embodiments of the present invention in conjunction with the drawings. It should be understood that the preferred embodiments described herein are only used to illustrate and explain the present invention and are not used to limit the present invention.

To overcome the disadvantages of the prior art to a certain extent, the present invention proposes a system based on the technology of coupling a gas turbine combined heat and power unit and a compressed air energy storage system. In the present invention, the gas turbine and the compressor are designed separately. During the low electricity consumption period, the compressor converts electrical energy into the pressure energy of compressed air and the thermal energy of hot water for storage. During the high electricity consumption period, the hot water stored in the hot water tank is used to heat the compressed air. Part of the heated compressed air is input into the air turbine unit to do work, and the remaining compressed air releases part of the pressure energy through the differential pressure turbine and then is input into the combustion chamber. The generated high-temperature flue gas drives the gas turbine to do work. The flue gas, after having performed work, can be utilized to prepare hot water, which is then supplied to a heating network for external district heating. At the same time, the shaft power generated by the gas turbine does not need to be divided to drive the compressor and can be all transmitted to the power grid, greatly improving the unit's output.

The multi-functional gas turbine power generation system given by the present invention comprises:
the first compressor unit, the second compressor unit, the gas storage device, the air turbine unit, the differential pressure turbine unit, the water-air heat exchanger and the water storage device; wherein,
the first compressor unit, the second compressor unit and the gas storage device are sequentially connected through valve pipelines; the air outlet of the first compressor unit is also connected to the air inlet of the gas storage device through a valve pipeline; the air inlet of the air turbine unit is connected to the air outlet of the gas storage device through a valve pipeline; the air inlet of the differential pressure turbine unit is connected to the air outlet of the gas storage device through a valve pipeline;
a water-air heat exchanger is provided after each compressor in the first compressor unit and the second compressor unit; a water-air heat exchanger is provided before each air turbine in the air turbine unit; water-air heat exchangers are provided at both ends of each differential pressure turbine in the differential pressure turbine unit;
each water-air heat exchanger is also connected to the water storage device.

According to some embodiments of the present invention, a cooler is also provided in the pipeline between the second compressor unit and the gas storage device. By providing the cooler, the compressed air cooled by the corresponding cooler of the compressor can be further cooled to ensure that the compressed air is cooled to room temperature.

According to some embodiments of the present invention, the water storage device comprises a hot water storage tank and a cold water storage tank, the hot water storage tank and the cold water storage tank are connected through a cooling water circulation pipeline, and each water-air heat exchanger is connected to the cooling water circulation pipeline. The heat of the compressed air is converted into hot water and stored in the hot water storage tank through heat exchange, which can effectively reduce energy waste.

According to some embodiments of the present invention, a cooling tower is also provided in the cooling water circulation pipeline before the water inlet of the cold water storage tank to ensure that the cooling water entering the cold water storage tank is fully cooled.

According to some embodiments of the present invention, a pipeline interface is reserved between the last-stage differential pressure turbine in the differential pressure turbine unit and the water-air heat exchanger at the rear end of the exhaust of the last-stage differential pressure turbine, and the air outlet of the gas storage device is also connected to the pipeline interface through a valve pipeline. By altering the open/close states of the valve pipeline and other valve pipelines, the system presented in the present invention can be switched between an energy storage mode and an energy release mode, thereby achieving conversion between storing energy during off-peak electricity periods and releasing energy during peak electricity periods.

According to some embodiments of the present invention, the energy storage system defined by the present invention further comprises: a burner, a gas turbine, a combustion regenerator and a turbine heater; wherein,
the first air inlet of the burner is connected to the air outlet of the water-air heat exchanger at the rear end of the last-stage differential pressure turbine; the second air inlet of the burner is connected to the natural gas supply pipeline; the air outlet of the burner is connected to the air inlet of the gas turbine;
the combustion regenerator is used for heat exchange between the first pipeline and the second pipeline;
the turbine heater is used for heat exchange between the third pipeline and the fourth pipeline;
the first pipeline is the pipeline between the first air inlet of the burner and the water-air heat exchanger at the rear end of the last-stage differential pressure turbine; the second pipeline is the pipeline of the first exhaust branch of the air outlet of the gas turbine; the third pipeline is the pipeline between the last-stage air turbine in the air turbine unit and the corresponding water-air heat exchanger of the last-stage air turbine; the fourth pipeline is the pipeline of the second exhaust branch of the air outlet of the gas turbine. The air outlets of the first branch and the second branch are respectively connected to the air inlet of the main exhaust pipeline. A user-end water-air heat exchanger is also provided between the air inlet and the air outlet of the main exhaust pipeline, and the user-end water-air heat exchanger is used for heat exchange between the user-end heating pipeline network and the main exhaust pipeline. The gas turbine, the first-stage air turbine in the air turbine unit, and the first-stage differential pressure turbine in the differential pressure turbine unit are also respectively connected to the generator.

Fig. 1 shows a multi-functional energy storage system based on compressed air applicable to gas turbine power generation according to an embodiment of the present invention. The working process of the system is as follows:
During the energy storage stage, open the stop valves B42 and C43, and close the stop valves A41, D44, E45, F46, and G47; start the motors A6, B7, C8, and D9 to drive the compressors A2, B3, C4, and D5. The normal-pressure air from the atmosphere filtered by the air filter 1 is compressed in stages to high pressure; the high-temperature air at the outlets of each stage of the compressor passes through the inter-stage coolers A10, cooler B11, cooler C12, and the last-stage cooler D13 respectively, and is cooled to normal temperature; the normal-temperature high-pressure air at the outlet of the last-stage cooler D13 is stored in the gas storage device 14; the hot water coming out from the inter-stage cooler A10, cooler B11, and cooler C12 is stored in the hot water storage tank 36. The cooling water circulation circuit is driven by the circulation pump A37 and the circulation pump B40, the same below.

During the energy release stage, close the stop valves A41, B42, C43, and G47, and open the stop valves D44, E45, and F46; part of the normal-temperature high-pressure air coming out of the gas storage device 14 enters the water-air heat exchanger A15, exchanges heat with the hot water from the hot water storage tank 36, and is heated to about 200°C; the high-temperature and high-pressure air coming out of the water-air heat exchanger A15 enters the air turbine A19 to do work, driving the generator A18 to generate electricity; the waste gas coming out of the air turbine A19 enters the water-air heat exchanger B16, exchanges heat with the hot water from the hot water storage tank 36, and is heated to about 200°C; the high-temperature and high-pressure air coming out of the water-air heat exchanger B16 enters the air turbine B20 to do work; the waste gas coming out of the air turbine B20 enters the water-air heat exchanger C17, exchanges heat with the hot water from the hot water storage tank 36, and is heated to about 200°C; the high-temperature and high-pressure air coming out of the water-air heat exchanger C17 enters the air turbine heater 33, and is heated to about 300°C by high-temperature flue gas; the high-temperature and high-pressure air coming out of the air turbine heater 33 enters the air turbine C21 to do work, and the waste gas is discharged into the atmosphere; the remaining high-pressure air coming out of the gas storage device 14 enters the water-air heat exchanger D22, exchanges heat with the hot water from the hot water storage tank 36, and is heated to about 200°C; the high-temperature and high-pressure air coming out of the water-air heat exchanger D22 enters the differential-pressure turbine A26 to do work, driving the generator B25 to generate electricity; the waste gas coming out of the differential-pressure turbine A26 enters the water-air heat exchanger E23, exchanges heat with the hot water from the hot water storage tank 36, and is heated to about 200°C; the high-temperature and high-pressure air coming out of the water-air heat exchanger E23 enters the differential-pressure turbine B27 to do work; the waste gas coming out of the differential-pressure turbine B27 enters the water-air heat exchanger F24, exchanges heat with the hot water from the hot water storage tank 36, and is heated to about 200°C; the high-temperature and high-pressure air coming out of the water-air heat exchanger F24 enters the combustion regenerator 32, and is heated to about 450°C by high-temperature flue gas; the high-temperature and high-pressure air coming out of the combustion regenerator 32 enters the combustion chamber burner 31, mixes and burns with the natural gas from the natural gas pressure-regulating station 30, generating flue gas at 1300°C; the high-temperature and high-pressure flue gas enters the gas turbine 29 to do work; the waste gas coming out of the gas turbine 29 is about 500°C, part of the waste gas enters the combustion regenerator 32 and is cooled to about 200°C, and the remaining waste gas enters the turbine heater 33 and is cooled to about 200°C; the two strands of flue gas at about 200°C converge and then enter the user-end water-air heat exchanger 34, exchange heat with the water from the heat network, and are then discharged into the atmosphere; the low-temperature water coming out of the water-air heat exchangers A15, B16, C17, D22, E23, and F24 is cooled to normal temperature by the cooling tower 38 and then enters the cold water storage tank 39 for storage; the hot water coming out of the user-end water-air heat exchanger 34 enters the heating pipeline network for the heating user 35 to use.

Under the normal power supply mode, the working process of the system is as follows.

During the off-peak electricity period, open the stop valves A41 and C43, and close the stop valves B42, D44, E45, F46, and G47; start the motors A6 and B7 to drive the compressors A2 and B3 to work; the high-temperature and high-pressure air coming out from the compressors A2 and B3 passes through the coolers A10 and B11 respectively, and is cooled to normal temperature by the normal-temperature water from the cold water storage tank 39; the normal-temperature high-pressure air coming out from the cooler B11 enters the gas storage device 14 and is stored; the hot water coming out from the coolers A10 and B11 enters the hot water storage tank 36 and is stored.

During the peak electricity period, open the stop valves D44 and G47, and close the stop valves A41, B42, C43, E45, and F46; the normal-temperature high-pressure air coming out from the gas storage device 14 enters the water-air heat exchanger F24 and is heated to about 200°C by the hot water from the hot water storage tank 36; the high-temperature and high-pressure air coming out from the water-air heat exchanger F24 enters the combustion regenerator 32 and is heated to about 450°C by the high-temperature flue gas; the high-temperature and high-pressure air coming out from the combustion regenerator 32 enters the burner 31 and is mixed with the natural gas from the natural gas pressure regulating station 30 and then burned to generate high-temperature flue gas of about 1300°C; the high-temperature flue gas coming out from the burner 31 enters the gas turbine 29 to do work and drive the generator C28; the exhausted gas after doing work is about 500°C, and the exhausted gas is cooled to about 200°C through the combustion regenerator 32; the flue gas coming out from the combustion regenerator 32 enters the user-end water-air heat exchanger 34, exchanges heat with the water from the heating network, and then is discharged into the atmosphere; the low-temperature water coming out from the water-air heat exchanger F24 is cooled to normal temperature by the cooling tower 38, and the normal-temperature water coming out from the cooling tower 38 enters the cold water storage tank 39 and is stored; the hot water coming out from the user-end water-air heat exchanger 34 enters the heating network for the heating users 35 to use.

The beneficial effects of the above technical solutions are as follows:
1. The compression heat of the high-temperature air at the outlet of the compressor is stored, reducing the loss of high-quality heat energy, which is beneficial to improving the overall operating efficiency of the unit.
2. The split design of the gas turbine and the compressor saves the power consumption of the compressor during power generation and significantly improves the output of the gas turbine unit.
3. The exhaust gas of the gas engine is used to preheat the compressed air, improving the work capacity of the compressed air entering the air turbine. The preheated flue gas is used to heat the water from the heating network, recycling the low-quality heat energy and realizing a combined heat and power supply.
4. The unit can operate under two working conditions, namely the energy storage mode and the normal power supply mode, with good flexibility.

It will be apparent to those skilled in the art that various modifications and variations can be made to the present invention without departing from the spirit and scope of the present invention. In this way, if these amendments and variations of the present invention are within the ranges of the claims of the present invention and equivalent technologies thereof, the present invention is also intended to contain those amendments and modifications.

## Claims

1. A multi-functional gas turbine power generation system, **characterized by** comprising:
a first compressor unit, a second compressor unit, a gas storage device, an air turbine unit, a differential pressure turbine unit, a water-air heat exchanger and a water storage device; wherein,
the first compressor unit, the second compressor unit, and the gas storage device are connected in sequence through valve pipelines;
the air outlet of the first compressor unit is also connected to the air inlet of the gas storage device through a valve pipeline;
the air inlet of the air turbine unit is connected to the air outlet of the gas storage device through a valve pipeline; the air inlet of the differential pressure turbine unit is connected to the air outlet of the gas storage device through a valve pipeline;
the water-air heat exchanger is provided after each compressor in the first compressor unit and
the second compressor unit; the water-air heat exchanger is provided before each air turbine in the air turbine unit; water-air heat exchangers are provided at both ends of each differential pressure turbine in the differential pressure turbine unit;
each water-air heat exchanger is also connected to the water storage device;
a pipeline interface is reserved between the last-stage differential pressure turbine in the differential pressure turbine unit and the water-air heat exchanger at the rear end of the exhaust of the last-stage differential pressure turbine, and the air outlet of the gas storage device is also connected to the pipeline interface through a valve pipeline;
the system, also comprising:
a burner, a gas turbine, a combustion regenerator and a turbine heater; wherein,
the first air inlet of the burner is connected to the air outlet of the water-air heat exchanger at the rear end of the last-stage differential pressure turbine; the second air inlet of the burner is connected to the natural gas supply pipeline; the air outlet of the burner is connected to the air inlet of the gas turbine;
the combustion regenerator is used for heat exchange between the first pipeline and the second pipeline;
the turbine heater is used for heat exchange between the third pipeline and the fourth pipeline; the first pipeline is the pipeline between the first air inlet of the burner and the water-air heat exchanger at the rear end of the last-stage differential pressure turbine; the second pipeline is the pipeline of the first exhaust branch of the air outlet of the gas turbine; the third pipeline is the pipeline between the last-stage air turbine in the air turbine unit and the corresponding water-air heat exchanger of the last-stage air turbine; the fourth pipeline is the pipeline of the second exhaust branch of the air outlet of the gas turbine.

2. The system according to claim 1, wherein a cooler is also provided in the pipeline between the second compressor unit and the gas storage device.

3. The system according to claim 1, wherein the water storage device comprises a hot water storage tank and a cold water storage tank, the hot water storage tank and the cold water storage tank are connected through a cooling water circulation pipeline, and each water-air heat exchanger is connected to the cooling water circulation pipeline.

4. The system according to claim 3, wherein a cooling tower is also provided in the cooling water circulation pipeline before the water inlet of the cold water storage tank.

5. The system according to claim 1, wherein the air outlets of the first exhaust branch and the second exhaust branch are respectively connected to the air inlet of the main exhaust pipeline.

6. The system according to claim 5, wherein a user-end water-air heat exchanger is also provided between the air inlet and the air outlet of the main exhaust pipeline, and the user-end water-air heat exchanger is used for heat exchange between the user-end heating pipeline network and the main exhaust pipeline.

7. The system according to claim 1, wherein the first-stage air turbine in the air turbine unit, and the first-stage differential pressure turbine in the differential pressure turbine unit are also respectively connected to the generator.

8. The system according to claim 1, wherein an air filter is also provided before the air inlet of the first compressor unit.
